# EUROPEAN PATENT APPLICATION

(11) **EP 4 786 319 A1**
(43) Date of publication of application: **05.08.2026**
(21) Application number: 24869462.2
(22) Date of filing: 31.05.2024
(51) Int. Cl.: B62J 6/023, B60Q 1/076, B60Q 1/08, B60Q 1/18, B60Q 1/34, B62J 6/056

(54) **SADDLED VEHICLE**

(30) Priority: 29.09.2023 JP 2023170493
(71) Applicant: HONDA MOTOR CO., LTD., Tokyo 105-8404 (JP)
(72) Inventor: HANAI, Koji, Tokyo 107-8556 (JP); HOSODA, Yuta, Tokyo 107-8556 (JP)
(74) Representative: Weickmann & Weickmann PartmbB
(86) International application number: PCT/JP2024/020094
(87) International publication number: WO 2025/069569

(57) **Abstract**

Visibility of a course-changed path when a direction indicator lamp is on is improved and convenience for an occupant is further improved. In a saddled vehicle including a direction indicator lamp 3 and a control unit 24 that controls lighting equipment provided in a vehicle body, the lighting equipment is capable of applying, relative to the vehicle body when it is standing upright, a first irradiation range that is on a front right or left side of the vehicle body, and a second irradiation range that is on the front right or left side on a vehicle-body forward side of the first irradiation range, and the control unit 24 performs control such that, in a case in which the direction indicator lamp 3 is activated and the vehicle body is not tilted, first illumination light Lc1 capable of illuminating the first irradiation range corresponding to an activation side of the direction indicator lamp 3 is applied, and in a case in which the direction indicator lamp 3 is activated and the vehicle body is tilted by a predetermined level or more, second illumination light Lc2 capable of illuminating the second irradiation range corresponding to the activation side of the direction indicator lamp 3 is applied.

## Description

### Technical Field

The present invention relates to a saddled vehicle.

### Background Art

Some saddled vehicles such as motorcycles include right and left cornering lamps that illuminate front lateral sides of a vehicle body (see, for example, Patent Literature 1). This type of saddled vehicle requires the vehicle body to be tilted to one of right and left (inner side) during turning.

### Citation List

### Patent Literature

Patent Literature 1: International Publication No. WO 2021/124778

### Summary of Invention

### Technical Problem

Meanwhile, there has been room for improvement of convenience for a user regarding the cornering lamps due to situations such as inability of the cornering lamp to be turned on before the vehicle body is tilted to the right or left while a direction indicator is on, in a case in which the cornering lamp is controlled to turn on after the vehicle body is tilted to the right or left.

An object of the present invention, which has been made in view of the above-mentioned circumstances, is to improve visibility of a course-changed path when a direction indicator is on and further improve convenience for an occupant.

### Solution to Problem

This specification includes all contents of Japanese Patent Application No. 2023-170493 filed on September 29, 2023.

A saddled vehicle includes a direction indicator lamp, an activation detection unit that detects an activation of the direction indicator lamp, a tilt information acquisition unit that detects tilt information that makes it possible to identify tilt to right or left of a vehicle body, and a control unit that controls lighting equipment provided in the vehicle body, and the vehicle body is tilted to one of right and left when the saddled vehicle turns at least at a predetermined speed or more. In the saddled vehicle, the lighting equipment includes a first irradiation lamp capable of applying first illumination light toward a front right or left side of the vehicle body, and the control unit causes, in a case in which the activation of the direction indicator lamp is detected and the vehicle body is detected as a non-tilted state based on the tilt information, the first illumination light corresponding to an activation side of the direction indicator lamp to be applied.

### Advantageous Effects of Invention

It is possible to improve the visibility of the course-changed path when the direction indicator is on and to further improve the convenience for the occupant.

### Brief Description of Drawings

[Figure 1] Figure 1 is a block diagram illustrating a driving support device of a saddled vehicle according to an embodiment of the present invention together with peripheral components.
[Figure 2] Figure 2 is a diagram schematically illustrating screen light distributions when a vehicle body is standing upright.
[Figure 3] Figure 3 is a flowchart illustrating an operation of illumination control of the driving support device.
[Figure 4] Figure 4 is a diagram illustrating an irradiation range for each driving situation while a direction indicator lamp is activated.
[Figure 5] Figure 5 is a diagram illustrating an irradiation range for each driving situation while a direction indicator lamp is activated according to a first modification example.
[Figure 6] Figure 6 is a flowchart illustrating an operation of illumination control of a driving support device according to a second modification example.

### Description of Embodiments

Hereinafter, an embodiment of the present invention will be described with reference to the drawings.

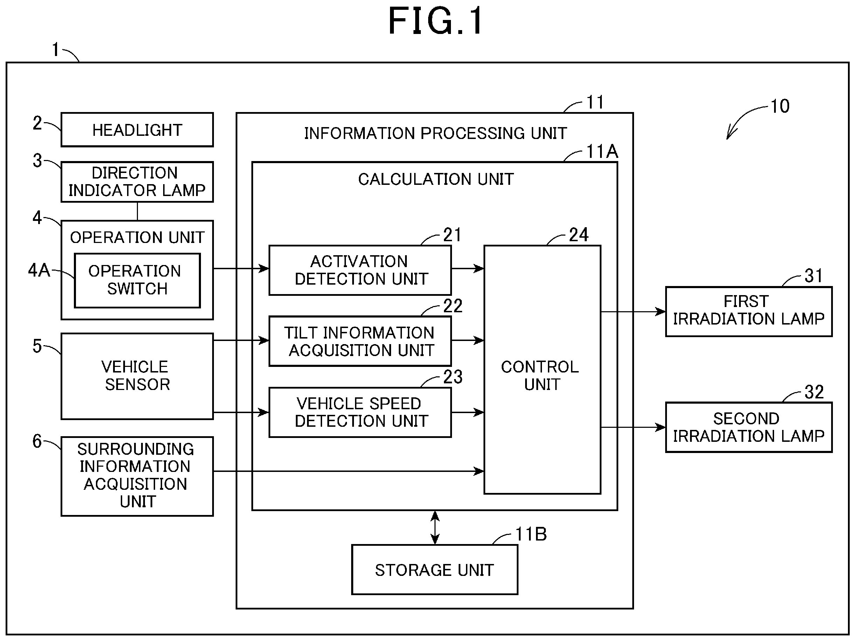

Figure 1 is a block diagram illustrating a driving support device 10 of a saddled vehicle 1 according to an embodiment of the present invention together with peripheral components.

This driving support device 10 is a device that performs driving support by controlling a first irradiation lamp 31 and a second irradiation lamp 32 that are mounted on the saddled vehicle 1 and capable of applying illumination light toward front right and left sides of a vehicle body. This driving support device 10 can also be called a driving assistance device, an in-vehicle device, or the like.

In the present embodiment, the first irradiation lamp 31 and the second irradiation lamp 32 are pieces of lighting equipment that function as cornering lights. However, the first irradiation lamp 31 and the second irradiation lamp 32 are not limited to cornering lights, and may each be lighting equipment that functions as a part of a low beam or a part of a high beam of a headlight 2 (for example, a part of an adaptive driving beam system).

The saddled vehicle 1 of the present embodiment is a motorcycle. In general, when a motorcycle turns at least at a predetermined speed or more, the vehicle body is required to be tiled to one of right and left (inner side). However, even a motorcycle can turn only by handlebar operation at an extremely low speed corresponding to a speed less than the predetermined speed, that is, the motorcycle can turn to the right or left even when the vehicle body is in an upright state (a state in which the vehicle body is brought perpendicular to a road surface).

It is to be noted that the saddled vehicle 1 is not limited to a motorcycle, and is widely applicable to any vehicle whose vehicle body is tilted to one of right and left during turning. Hereinafter, for convenience of description, the saddled vehicle 1 having the driving support device 10 installed thereon is referred to as "vehicle 1" or "own vehicle 1" as appropriate.

The vehicle 1 includes, as components related to the driving support device 10, the headlight 2 that illuminates the front side of the vehicle body, direction indicator lamps 3 that indicate directions of right and left turns and course changes, an operation unit 4 to be operated by an occupant (mainly a driver), a vehicle sensor 5 that acquires information related to the vehicle body of the own vehicle 1 (hereinafter referred to as vehicle body information), a surrounding information acquisition unit 6 that acquires information related to the surroundings of the own vehicle 1 (hereinafter referred to as surrounding information), and the first irradiation lamp 31 and the second irradiation lamp 32.

The headlight 2 is lighting equipment that functions as a head lamp and applies a low beam and a high beam, and can also be referred to as a headlight unit, a front light unit, or the like. The headlight 2 in the present embodiment is of an always-on type, and, when a power unit starts or the ignition is turned on, the headlight 2 is automatically turned on. It is to be noted that the headlight 2 is not required to be of the always-on type.

A pair of direction indicator lamps 3 on right and left sides is provided at each of the front and the rear of the vehicle body, and is lighting equipment also called turn signals, turn lamps, turn signal lights, and direction indicators.

The operation unit 4 includes a plurality of switches to be operated by the occupant to operate each unit of the vehicle body, and those switches include an operation switch 4A for operating the direction indicator lamps 3. Before performing course changes including right and left turns or lane changes, the driver of the vehicle 1 operates the operation switch 4A to activate the direction indicator lamp 3 on one of the right and left sides corresponding to the course-changed path, and, after the right and left turns or the lane changes, the driver operates the operation switch 4A to stop the activation of the direction indicator lamp 3. For example, a push-cancel indicator switch (turn signal switch) is applied to the operation switch 4A, but indicator switches of other types may be used.

The vehicle sensor 5 includes an inertial sensor such as an IMU (Inertial Measurement Unit) and a vehicle speed sensor. The inertial sensor detects acceleration in front, rear, right, and left directions, triaxial angular velocity, and the like, and subjects the triaxial angular velocity to a predetermined conversion to identify a roll angle, a pitch angle, and a yaw angle of the own vehicle 1, thereby capable of identifying a tilt angle to the right or left of the own vehicle 1 from the roll angle.

The surrounding information acquisition unit 6 includes a sensor that acquires brightness of the surrounding environment of the own vehicle 1. The first irradiation lamp 31 is lighting equipment capable of applying right or left first illumination light Lc1 that functions as a first cornering light beam, and the second irradiation lamp 32 is lighting equipment capable of applying right or left second illumination light Lc2 that functions as a second cornering light beam toward a vehicle-body forward side of the first illumination light Lc1.

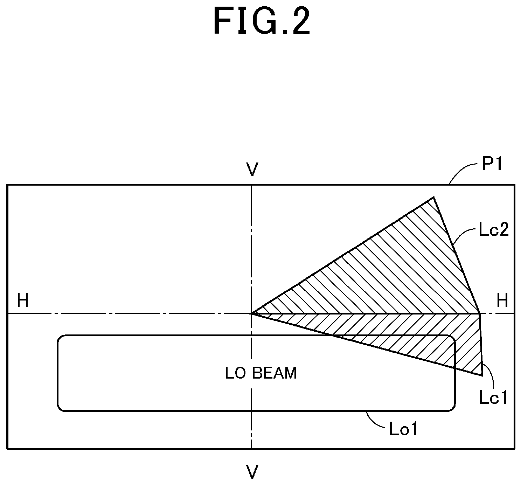

Figure 2 is a diagram schematically illustrating a screen light distribution P1 of the headlight 2, the first irradiation lamp 31, and the second irradiation lamp 32 when the vehicle body is standing upright, and illustrates a range having a predetermined luminous intensity or more that contributes to improvement in visibility in a dark surrounding situation such as at night. A horizontal line H indicated by the line H-H in Figure 2 is a horizontal reference line parallel to a vehicle center plane, and a vertical line V indicated by the line V-V is a reference line perpendicular to the vehicle center plane.

Figure 2 illustrates a state in which a low beam (LO BEAM) Lo1, the right first illumination light Lc1, and the right second illumination light Lc2 are all turned on. The direction and the irradiation range of the right first illumination light Lc1 are set so as to illuminate the front right side of the vehicle body near the low beam Lo1. The first illumination light Lc1 can illuminate a road surface and its surroundings on the front right side of the vehicle body close to the occupant, which is a region that complements the low beam Lo1 and a high beam.

It is to be noted that the left first illumination light Lc1 illuminates a range that is the same as or similar to a symmetrical range of the right first illumination light Lc1 with respect to the vertical line V. This allows the left first illumination light Lc1 to illuminate the road surface and its surroundings on the front left side of the vehicle body close to the occupant, which is a region that complements the low beam Lo1 and the high beam.

In this configuration, each irradiation range of the right or left first illumination light Lc1 is set so that it is easy to visually recognize a course-changed path, such as a right or left turn destination or a changed lane, at least when the vehicle body is standing upright. It is to be noted that the irradiation range of the right or left first illumination light Lc1 may be changed as appropriate within a range that satisfies this condition.

The irradiation range of the right first illumination light Lc1 corresponds to a "first irradiation range corresponding to an activation side of the direction indicator lamp 3 being the right side" in the present invention, and the irradiation range of the left first illumination light Lc1 corresponds to a "first irradiation range corresponding to an activation side of the direction indicator lamp 3 being the left side" in the present invention.

The direction and the irradiation range of the right second illumination light Lc2 are set so as to illuminate the right side of the vehicle body on the vehicle-body forward side of the right second illumination light Lc2. The second illumination light Lc2 can illuminate a road surface and its surroundings on the front right side of the vehicle body separated away from the occupant, which is a region that complements the low beam Lo1 and the high beam.

The left second illumination light Lc2 illuminates a range that is the same as or similar to the symmetrical range of the right second illumination light Lc2 with respect to the vertical line V. This allows the left second illumination light Lc2 to illuminate the road surface and its surroundings on the front left side of the vehicle body separated away from the occupant, which is a region that complements the low beam and the high beam.

In this configuration, each irradiation range of the right or left second illumination light Lc2 is set so that it is easy to visually recognize a course-changed path, such as a right or left turn destination or a changed lane, at least when the vehicle body is tilted to right or left. It is to be noted that the irradiation range of the right or left second illumination light Lc2 may be changed as appropriate within a range that satisfies this condition.

The irradiation range of the right second illumination light Lc2 corresponds to a "second irradiation range corresponding to an activation side of the direction indicator lamp 3 being the right side" in the present invention, and the irradiation range of the left first illumination light Lc1 corresponds to a "second irradiation range corresponding to an activation side of the direction indicator lamp 3 being the left side" in the present invention.

With reference back to Figure 1, the driving support device 10 includes an information processing unit 11 that performs various types of information processing. The information processing unit 11 includes a calculation unit 11A and a storage unit 11B. The calculation unit 11A is configured of a CPU, a microcomputer, and the like, and executes a control program stored in the storage unit 11B to function as an activation detection unit 21, a tilt information acquisition unit 22, a vehicle speed detection unit 23, and a control unit 24. The activation detection unit 21, the tilt information acquisition unit 22, the vehicle speed detection unit 23, and the control unit 24 are not limited to configurations implemented by software, and may be configurations implemented by hardware.

The activation detection unit 21 detects activation or activation stop of the direction indicator lamp 3 based on the operation state of the operation switch 4A. It is to be noted that the activation detection unit 21 is not limited to a configuration that detects the activation or activation stop of the direction indicator lamp 3 based on the operation state of the operation switch 4A, and any configuration that detects the activation or activation stop of the direction indicator lamp 3 is applicable.

The tilt information acquisition unit 22 acquires tilt information that makes it possible to identify tilt to the right or left of the vehicle body from the detection result obtained by the inertial sensor in the vehicle sensor 5. The vehicle speed detection unit 23 detects the vehicle speed from the detection result obtained by the vehicle speed sensor in the vehicle sensor 5. The detection results obtained by the detection units 21 and 23 and the tilt information acquired by the surrounding information acquisition unit 6 are output to the control unit 24.

The control unit 24 performs illumination control to activate or stop the activation of the first irradiation lamp 31 and the second irradiation lamp 32 based on the detection results obtained by the detection units 21 and 23 and the information acquired by the surrounding information acquisition unit 6.

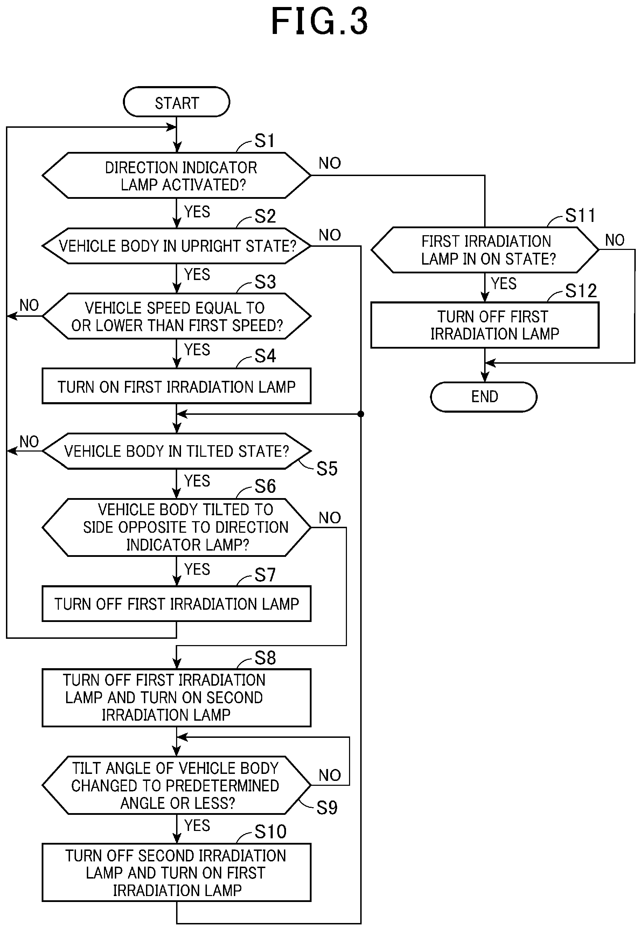

Figure 3 is a flowchart illustrating an operation of illumination control of the driving support device 10. The process flow illustrated in Figure 3 is repeatedly executed at a predetermined period under a circumstance in which ignition on, engine start (power unit start), or the like of the vehicle 1 is detected. It is to be noted that the operation illustrated in Figure 3 is preferably executed when the brightness acquired by the surrounding information acquisition unit 6 is equal to or lower than a predetermined brightness. The predetermined brightness is a determination reference value for determining that the surroundings are a dark environment such as at night or in the evening, and is set to an appropriate value.

First, the control unit 24 determines whether or not any one of the right and left direction indicator lamps 3 is activated based on the detection result obtained by the activation detection unit 21 (step S1), and, when any direction indicator lamp 3 is activated, the control unit 24 proceeds to the process of step S2.

It is to be noted that, when no direction indicator lamp 3 is activated (step S1; NO), the control unit 24 proceeds to the process of step S11. With the processes of step S11 and step S12 following this step S11, when the first irradiation lamp 31 is not on, the control unit 24 immediately ends the process flow illustrated in Figure 3, and, when the first irradiation lamp 31 is on, the control unit 24 turns off the first irradiation lamp 31 and then ends the process flow illustrated in Figure 3.

When the direction indicator lamp 3 is activated and the process proceeds to step S2, the control unit 24 determines whether or not the vehicle body is in an upright state based on the tilt information acquired by the tilt information acquisition unit 22. In this case, it is preferable that the control unit 24 determine that the vehicle body is in the upright state when the tilt angle is in a first range (for example, -5° to +5°) around 0°, assuming that a tilt angle is 0° in a state in which the vehicle body is perpendicular to the ground. In this manner, the control unit 24 determines that the vehicle body is in the upright state even in a case of a tilted state in a level that can be regarded as the upright state. It is to be noted that the first range is only required to be set to an appropriate range.

When the vehicle body is in the upright state (step S2; YES), the control unit 24 proceeds to the process of step S3 and determines whether or not the vehicle speed detected by the vehicle speed detection unit 23 is equal to or lower than a first speed. The first speed is set to a speed higher than a general speed required to complete the right or left turn, and is set to an appropriate value within a range of, for example, 1 km/h to 40 km/h.

When the vehicle body is in the upright state and the vehicle speed is equal to or lower than the first speed (step S3; YES), the control unit 24 turns on the first irradiation lamp 31 (step S4) and then proceeds to the process of step S5. Meanwhile, when the vehicle body is not in the upright state (step S2; NO), the control unit 24 proceeds to the process of step S5 without executing the process of step S3. Further, when the vehicle speed is not equal to or lower than the first speed, the control unit 24 proceeds to the process of step S1. It is to be noted that the process of step S3 may be omitted.

In step S5, the control unit 24 determines whether or not the vehicle body is in a tilted state based on the tilt information. In this case, the control unit 24 determines that the vehicle body is in the tilted state when the tilt angle is outside of the first range of step S2, assuming that the tilt angle of 0° in a state in which the vehicle body is perpendicular to the ground.

When the vehicle body is not in the tilted state (step S5; NO), the control unit 24 proceeds to the process of step S1. As a result, while the direction indicator lamp 3 is activated and the vehicle body is in the upright state of step S2, the first irradiation lamp 31 is maintained in the on state.

When the vehicle body is in the tilted state (step S5; YES), the control unit 24 proceeds to the process of step S6. In step S6, the control unit 24 determines whether or not the vehicle body is tilted to a side opposite to the activated direction indicator lamp 3, based on the tilt information.

When the vehicle body is tilted to the side opposite to the activated direction indicator lamp 3 (step S6; YES), the control unit 24 turns off the first irradiation lamp 31 when the first irradiation lamp 31 is on (step S7), and then proceeds to the process of step S1. It is to be noted that, when the first irradiation lamp 31 is not on, the control unit 24 immediately proceeds to the process of step S1.

When the vehicle body is in the tilted state (step S5; YES) and the vehicle body is not tilted to the side opposite to the activated direction indicator lamp 3 (step S6; YES), the control unit 24 proceeds to the process of step S8. In step S8, the control unit 24 turns off the first irradiation lamp 31 and turns on the second irradiation lamp 32.

As a result, when the vehicle body changes to the tilted state of step S5 while the direction indicator lamp 3 is activated, the first irradiation lamp 31 is switched to the off state and the second irradiation lamp 32 is switched to the on state.

After the second irradiation lamp 32 is turned on, the control unit 24 determines whether or not the tilt angle of the vehicle body has changed to a predetermined angle or less (step S9). In this case, the control unit 24 monitors whether or not the tilt angle has changed to the first range of step S2, that is, whether or not the vehicle body has returned to the upright state, assuming that the tilt angle is 0° in the state in which the vehicle body is perpendicular to the ground.

It is to be noted that the tilt angle of the predetermined angle or less of step S9 is not required to be limited to a case in which the tilt angle is in the first range, and may be changed as appropriate within a range of tilt angles for which it is inappropriate to turn on the second irradiation lamp 32.

When the tilt angle of the vehicle body has changed to the predetermined angle or less (step S9; YES), the control unit 24 turns off the second irradiation lamp 32 and turns on the first irradiation lamp 31 (step S10). After the process of step S10 is executed, the control unit 24 proceeds to the process of step S5. As a result, when the vehicle body is not in the tilted state and the direction indicator lamp 3 is activated, the first irradiation lamp 31 is kept in the on state, and, when the vehicle body changes to the tilted state, the on state is switched from the first irradiation lamp 31 to the second irradiation lamp 32. Thus, after the direction indicator lamp 3 is activated, control is performed to achieve a state in which the first irradiation lamp 31 is on while the vehicle body is in the upright state, and the second irradiation lamp 32 is on while the vehicle body is in the tilted state.

As illustrated in Figure 3, when the vehicle body is in the tilted state while the first irradiation lamp 31 is in the on state (when step S5 is a negative result), or when the first irradiation lamp 31 is turned off in step S7, the control unit 24 proceeds to the process of step S1 and determines whether or not the activation of the direction indicator lamp 3 is stopped.

When the activation of the direction indicator lamp 3 is stopped, the control unit 24 proceeds to the process of step S11, and immediately ends the process flow illustrated in Figure 3 when the first irradiation lamp 31 is not on. Further, when the activation of the direction indicator lamp 3 is stopped, if the first irradiation lamp 31 is on, the control unit 24 turns off the first irradiation lamp 31 and then ends the process flow illustrated in Figure 3 (steps S11 and S12).

Thus, when the activation of the direction indicator lamp 3 is stopped, both the first irradiation lamp 31 and the second irradiation lamp 32 are in the off state.

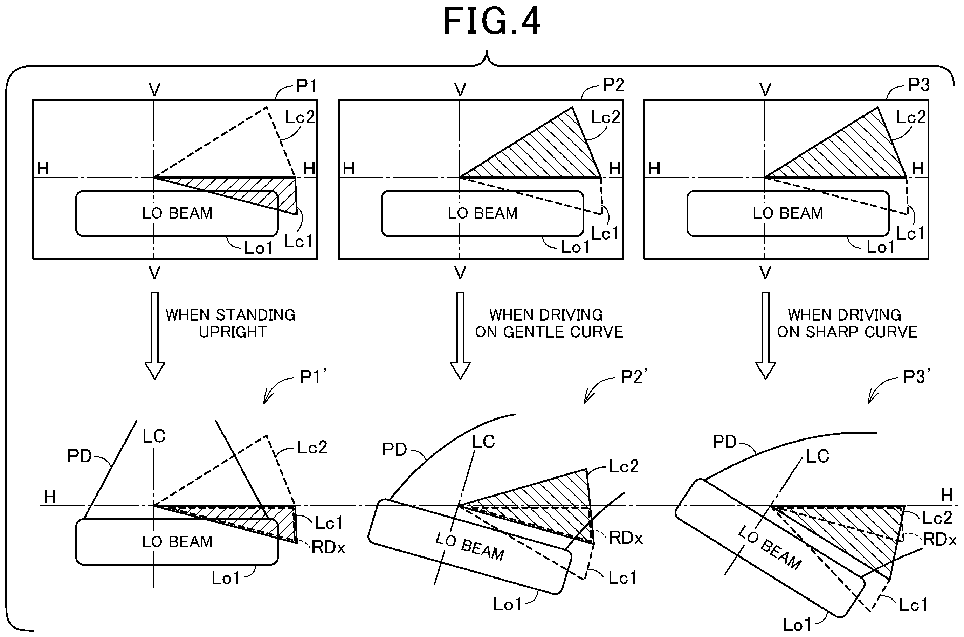

Figure 4 is a diagram illustrating an irradiation range for each driving situation while the right direction indicator lamp 3 is activated.

Figure 4 illustrates cases at the time of standing upright, at the time of driving on a gentle curve, and at the time of driving on a sharp curve as driving situations, and illustrates screen light distributions P1, P2, and P3 for the respective driving situations, as well as illumination situations P1', P2', and P3' of a road surface RD for the respective driving situations as viewed from the occupant. Each driving situation shows a state in which the vehicle speed is equal to or lower than the first speed and the low beam Lo1 is on. Further, in order to make it easier to understand the state of being tilted to the right or left of the vehicle body, a vehicle width center position is indicated by a vehicle width center LC extending in an up-down direction of the vehicle body.

As illustrated in Figure 4, at the time of standing upright while the direction indicator lamp 3 is activated, the first irradiation lamp 31 is turned on as illustrated in the screen light distribution P1. Accordingly, as illustrated in the illumination situation P1', the first illumination light Lc1 of the first irradiation lamp 31 illuminates the road surface RD in a region RDx on the front right side of the vehicle body close to the occupant.

Here, the time of standing upright while the right direction indicator lamp 3 providing the illumination situation P1' is activated is expected to be, for example, the time of standby to turn right. Further, when the condition of step S3 in which the vehicle speed is equal to or lower than the first speed is omitted, the illumination situation P1' is also expected to be a case of immediately before changing the lane to the right lane. At the time of standby to turn right or immediately before changing the lane to the right lane, with the region RDx of the road surface RD being illuminated, it becomes easier to appropriately illuminate the course-changed path. For example, at the time of standby to turn right at an intersection, the crosswalk and the road near the right turn destination can be illuminated, thereby improving the visibility of the course-changed path for the occupant to make it easier to notice unevenness (for example, grooves) on the road surface RD and notice pedestrians and the like around the right turn destination. Further, it is possible to expect an effect of improving visibility of the vehicle 1 from others (pedestrians and drivers of other vehicles) around the right turn destination.

Further, at the time of driving on a gentle curve while the direction indicator lamp 3 is activated, the vehicle body is in the tilted state, and hence the second irradiation lamp 32 is turned on as illustrated in the screen light distribution P2. The second illumination light Lc2 of the second irradiation lamp 32 is applied toward the front lateral side on the vehicle-body forward side of the first illumination light Lc1, but is applied to, as illustrated in the illumination situation P2', the inner side of the road surface RD close to the vehicle body because the vehicle body is in the tilted state. This makes it possible to illuminate, as illustrated in the illumination situation P2', a range including the region RDx illuminated in the illumination situation P1' as viewed from the occupant, and also illuminate a direction in which the curve extends.

Here, the time of driving on a gentle curve while the right direction indicator lamp 3 providing the illumination situation P2' is activated is expected to be, for example, the time of starting turning from the standby to turn right. Further, when the condition of step S3 in which the vehicle speed is equal to or lower than the first speed is omitted, the illumination situation P2' is also expected to be the time of starting turning to change the lane. In this case, the road surface inner side including the region RDx of the road surface RD is illuminated, and hence the visibility of the turning destination is improved for the occupant, and it is also possible to expect an effect of improving the visibility of the vehicle 1 for others around the turning destination.

Further, at the time of driving on a sharp curve while the direction indicator lamp 3 is activated, the vehicle body is in the tilted state, and hence, as illustrated in the screen light distribution P3, the second irradiation lamp 32 is turned on. The second illumination light Lc2 of the second irradiation lamp 32 is applied toward the front lateral side on the vehicle-body forward side of the first illumination light Lc1, but is applied to, as illustrated in the illumination situation P3', the inner side of the road surface RD close to the vehicle body because the vehicle body is in the tilted state. This makes it possible to illuminate, as illustrated in the illumination situation P3', a range including the region RDx illuminated in the illumination situations P1' and P2' as viewed from the occupant, and also illuminate a direction in which the curve extends.

Here, the time of driving on a sharp curve while the right direction indicator lamp 3 providing the illumination situation P3' is activated is expected to be, for example, the time of turning right. Further, when the condition of step S3 in which the vehicle speed is equal to or lower than the first speed is omitted, the illumination situation P3' is also expected to be the time of turning to change the lane. In this case, the inner side of the road surface RD including the region RDx of the road surface RD is illuminated, and hence the visibility of the turning destination is improved for the occupant, and it is also possible to expect an effect of improving the visibility of the vehicle 1 for others around the turning destination.

As described above, in this configuration, as illustrated in the illumination situations P1', P2', and P3', regardless of the time of standing upright, the time of driving on a gentle curve, or the time of driving on a sharp curve while the direction indicator lamp 3 is activated, the first irradiation lamp 31 and the second irradiation lamp 32 illuminate the road surface RD so that the same region RDx on the activation side of the direction indicator lamp 3 is illuminated. This also makes it easier for the occupant to visually recognize the road surface RD.

It is to be noted that the embodiment is not limited to illuminating the same region RDx on the activation side of the direction indicator lamp 3, and the directions and the irradiation ranges of the first irradiation lamp 31 and the second irradiation lamp 32 may be changed as appropriate in a range that improves the visibility of the course-changed path.

The irradiation range for each driving situation while the right direction indicator lamp 3 is activated has been described with reference to Figure 4, but the irradiation range for each driving situation while the left direction indicator lamp 3 is activated is the same as in Figure 4, except for being reversed left to right. Accordingly, regardless of the time of standing upright, the time of driving on a gentle curve, or the time of driving on a sharp curve while the left direction indicator lamp 3 is activated, the visibility of the course-changed path is improved for the occupant, and it is also possible to expect an effect of improving the visibility of the vehicle 1 for others around the course-changed path. Moreover, the same region RDx on the left side that is the activation side of the direction indicator lamp 3 can also be illuminated, resulting in advantage in improvement of visibility for the occupant and the like.

Further, even at the time of not driving on a curve, when the vehicle body is brought to the tilted state, the second illumination light Lc2 corresponding to the activation side of the direction indicator lamp 3 is applied, and hence, even at the time of standby to turn right or left or immediately before changing the lane, the course-changed path can be illuminated by the second irradiation lamp 32 when the vehicle body is tilted. This can also improve the visibility of the turning destination for the occupant and it is possible to expect the effect of improving the visibility of the vehicle 1 for others around the course-changed path.

As described above, in the saddled vehicle 1 of the present embodiment, in a case in which the direction indicator lamp 3 is activated and the vehicle body is detected to be in the upright state without a tilt based on the tilt information, the first irradiation lamp 31 is controlled to apply the first illumination light Lc1 that can illuminate the irradiation range (first irradiation range) corresponding to the activation side of the direction indicator lamp 3, and hence, even before the right or left turn or before the course change, the course-changed path can be illuminated with the first illumination light Lc1 from the timing before the vehicle body is tilted.

Further, in a case in which the direction indicator lamp 3 is activated and the vehicle body is tilted by a predetermined level or more based on the tilt information, the saddled vehicle 1 controls the second irradiation lamp 32 to apply the second illumination light Lc2 that can illuminate the irradiation range (second irradiation range) corresponding to the direction indicator lamp 3 on the activation side, and hence, even before the right or left turn or before the course change, the course-changed path can be illuminated with the second illumination light Lc2 when the vehicle body is tilted.

As a result, the visibility of the course-changed path and the surroundings of the course-changed path when the direction indicator lamp is on can be improved, and the convenience for the occupant can be more improved.

Further, the saddled vehicle 1 includes the vehicle speed detection unit 23, and the control unit 24 causes the first illumination light Lc1 corresponding to the activation side of the direction indicator lamp 3 to be applied in a case in which the direction indicator lamp 3 is activated and the vehicle body is not tilted based on the tilt information, and further in a case in which the vehicle speed is equal to or lower than the first speed. With this configuration, the course-changed path can be illuminated with the first illumination light Lc1 from a timing before the vehicle body is tilted when the vehicle speed is a low speed of equal to or lower than the first speed, and the visibility of the course-changed path and the surroundings of the course-changed path when the direction indicator lamp is on is improved. Thus, the convenience for the occupant can be further improved. Further, it is also possible to expect the effect of improving visibility from others around the course-changed path.

The case in which the vehicle speed is equal to or lower than the first speed includes a state in which the vehicle speed is zero, and hence, for example, at the time of standby to turn right or left, the destination of the right or left turn can be illuminated with the first illumination light Lc1 from a timing before the vehicle body is tilted, and hence the convenience for the occupant can be further improved. Further, it is also possible to expect the effect of improving the visibility from others around the destination of the right or left turn.

Further, the control unit 24 stops irradiation of the second illumination light Lc2 when, after the second illumination light Lc2 is applied, it is detected based on the tilt information that the tilt angle of the vehicle body is equal to or less than a predetermined angle. With this configuration, even when the direction indicator lamp 3 is activated, the second illumination light Lc2 can be turned off when the tilt angle to the right or left of the vehicle body returns to the upright side. Thus, when turn-on switching is performed between the first illumination light Lc1 and the second illumination light Lc2 in accordance with the tilt of the vehicle body, it is possible to smoothly perform switching from the second illumination light Lc2 to the first illumination light Lc1.

Further, the control unit 24 stops irradiation of the first illumination light Lc1 when, after the first illumination light Lc1 is applied, the vehicle body is tilted to a side opposite to the activated direction indicator lamp 3 based on the tilt information. With this configuration, even when the direction indicator lamp 3 is forgotten to be stopped after the right or left turn or the like, the irradiation of the first illumination light Lc1 can be automatically stopped. This makes it possible to prevent dazzling caused by unnecessary irradiation of the first illumination light Lc1 due to forgetting to operate the direction indicator lamp 3, and reduce the influence of the irradiation of the first illumination light Lc1 on the surroundings.

Further, the case in which the vehicle body is not tilted refers to a case in which the tilt angle of the vehicle body is in the first range around 0° based on the tilt information, and hence the first illumination light Lc1 is applied even when the vehicle body is in the tilted state in a level that can be regarded as the upright state before the right or left turn or before the course change. This makes it possible to illuminate the course-changed path with the first illumination light from an early timing, and to further improve the convenience for the occupant.

It is to be noted that "the vehicle body is in the upright state" and "the tilt angle of the vehicle body is in the first range around 0°" described above are examples of "the vehicle body is in a non-tilted state" and "a case in which the vehicle body is not tilted" in the present invention.

The above-mentioned embodiment represents one aspect of the present invention. The present invention is not limited to the above-mentioned embodiment, and the detailed configuration and the like may be changed as appropriate.

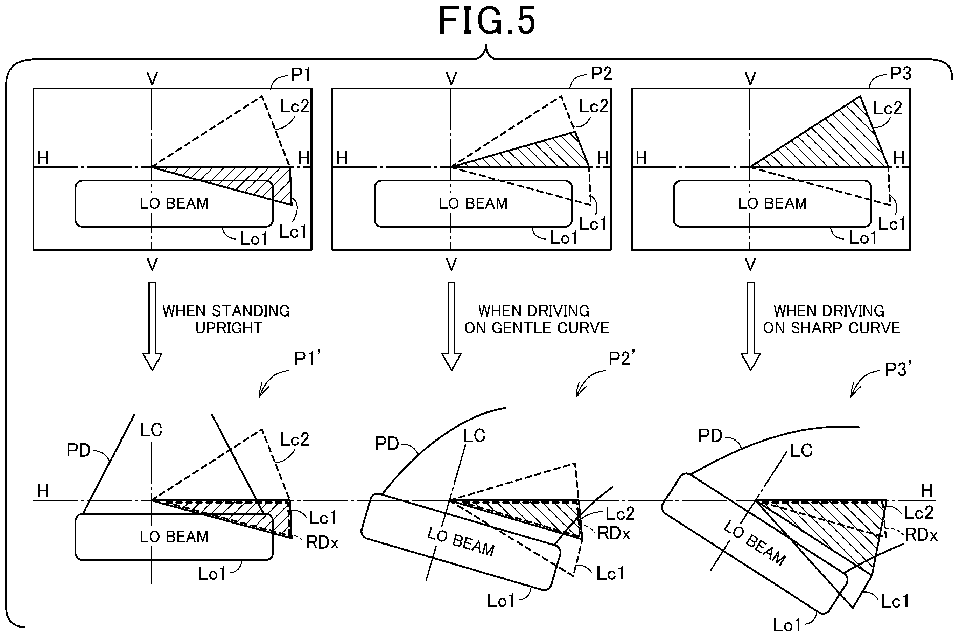

Figure 5 is a diagram illustrating the irradiation range for each driving situation when the right direction indicator lamp 3 is activated according to a first modification example. The first modification example corresponds to a case in which it is required to suppress the irradiation light to be equal to or less than a legal line Hr indicated by the line H-H in Figure 5 due to regulations and the like. Hereinafter, different parts will be described and overlapping description will be omitted.

In the first modification example, in a case in which the vehicle body is in the tilted state corresponding to the time of driving on a gentle curve, when the second illumination light Lc2 is applied, part of the second illumination light Lc2 exceeds the legal line Hr, and hence the irradiation range of the second illumination light Lc2 is controlled to be variable so as not to exceed the legal line Hr.

In order to achieve this variable control, the second irradiation lamp 32 is configured to be able to vary the irradiation range of the second illumination light Lc2, and is configured to, for example, change the orientation of a light source or the like or selectively turn on or off a plurality of light sources to vary the irradiation range.

As illustrated in Figure 5, at the time of standing upright while the direction indicator lamp 3 is activated, the first irradiation lamp 31 is turned on as illustrated in the screen light distribution P1. As illustrated in the illumination situation P1', the first illumination light Lc1 of the first irradiation lamp 31 illuminates the road surface RD in the region RDx on the front right side of the vehicle body close to the occupant, and hence the irradiation range is expanded in a range that does not exceed the legal line Hr and the course-changed path can be illuminated.

Further, at the time of driving on a gentle curve while the direction indicator lamp 3 is activated, the vehicle body is in the tilted state, and hence the second irradiation lamp 32 is turned on as illustrated in the screen light distribution P2.

However, as illustrated in the illumination situation P2', a part of the irradiation range of the second irradiation lamp 32 exceeds the legal line Hr, and hence the irradiation range of the second irradiation lamp 32 is controlled to be reduced so as not to exceed the legal line Hr. This allows the irradiation range to be expanded in a range that does not exceed the legal line Hr and allows the course-changed path to be illuminated.

Further, at the time of driving on a sharp curve while the direction indicator lamp 3 is activated, the vehicle body is in the tilted state, and hence the second irradiation lamp 32 is turned on as illustrated in the screen light distribution P3. As illustrated in the illumination situation P3', the tilt angle of the vehicle body is large, and hence it is possible to expand the irradiation range in a range that does not exceed the legal line Hr and illuminate the course-changed path even without reducing the irradiation range of the second irradiation lamp 32.

As described above, the visibility of the course-changed path and the surroundings of the course-changed path when the direction indicator lamp is on is improved to further improve the convenience for occupant, and the visibility for others around the course-changed path is easily improved.

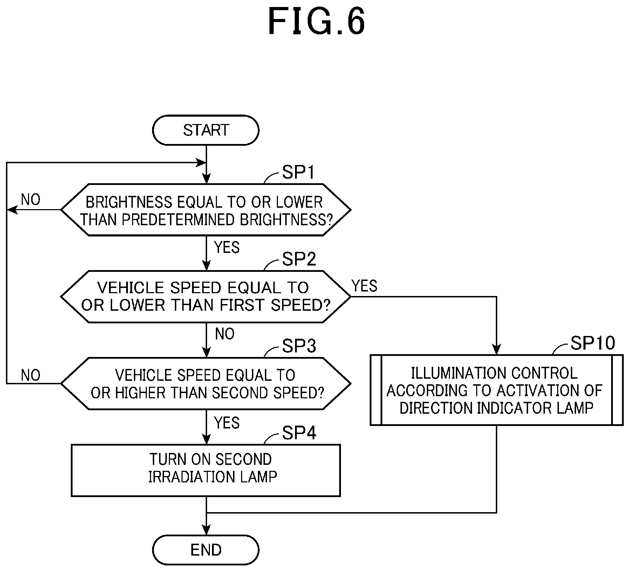

Figure 6 is a flowchart illustrating an operation of illumination control of the driving support device 10 according to a second modification example. In the second modification example, the illumination control illustrated in Figure 3 is illustrated as "illumination control according to activation of direction indicator lamp" illustrated in step SP10. Strictly speaking, the process illustrated in step SP10 is processes corresponding to steps S1 to S12, excluding the process of step S3 (the process of determining whether or not the vehicle speed is equal to or lower than the first speed).

As illustrated in Figure 6, the control unit 24 determines whether or not the brightness acquired by the surrounding information acquisition unit 6 is equal to or lower than a predetermined brightness (step SP1), and, when the brightness is equal to or lower than the predetermined brightness (step SP1; YES), the control unit 24 determines whether or not the vehicle speed is equal to or lower than the first speed (step SP2). When the vehicle speed is equal to or lower than the first speed (step SP2; YES), the control unit 24 proceeds to the process of step SP10, and executes the illumination control illustrated in Figure 3. In this manner, when the direction indicator lamp is activated, the first irradiation lamp 31 and the second irradiation lamp 32 are controlled in accordance with the tilt angle of the vehicle body and the like.

In contrast, when the vehicle speed is higher than the first speed (step SP2; NO), the control unit 24 determines whether or not the vehicle speed is equal to or higher than a second speed (step SP3), and when the vehicle speed is equal to or higher than the second speed (step SP3; YES), the control unit 24 turns on the right and left second irradiation lamps 32 (step SP4). In this case, the second speed is a speed higher than the first speed and is set to an appropriate value of, for example, 20 km/h or higher, and a range of the second speed or higher includes a speed range when the lane is changed.

As described above, when the brightness is equal to or lower than the predetermined brightness and the vehicle speed is equal to or higher than the second speed that is higher than the first speed, the second illumination light Lc2 can be applied toward the front right and left sides of the vehicle body, regardless of whether or not the direction indicator lamp is activated or whether or not the vehicle body is tilted to the right or left. This allows the second illumination light Lc2 to be applied toward the right and the left of the vehicle body when the vehicle is traveling at a relatively high speed under a situation of dark surroundings. Accordingly, for example, when the course change is performed, the second illumination light Lc2 is applied toward the right and the left of the vehicle body, which makes it easier for surrounding vehicles and the like including other vehicles traveling in the lane of the course-changed path to notice the vehicle 1.

It is to be noted that, as illustrated in Figure 6, when the brightness is not equal to or lower than the predetermined brightness (step SP1; NO), or when the vehicle speed is not equal to or higher than the second speed (step SP3; NO), the control unit 24 proceeds to the process of step SP1. This makes it possible to prevent the first irradiation lamp 31 and the second irradiation lamp 32 from being turned on when the surroundings are bright or when the vehicle speed is a low speed that is lower than the second speed.

### [Configurations Supported by Above-mentioned Embodiment]

The above-mentioned embodiment is supported by the following configurations.

(Configuration 1) A saddled vehicle including a direction indicator lamp, and a control unit that controls lighting equipment provided in a vehicle body, in which the lighting equipment is capable of applying, relative to the vehicle body when it is standing upright, a first irradiation range that is on a front right or left side of the vehicle body, and a second irradiation range that is on the front right or left side on a vehicle-body forward side of the first irradiation range, and in which the control unit performs control such that, in a case in which the direction indicator lamp is activated and the vehicle body is not tilted, first illumination light capable of illuminating the first irradiation range corresponding to an activation side of the direction indicator lamp is applied, and in a case in which the direction indicator lamp is activated and the vehicle body is tilted by a predetermined level or more, second illumination light capable of illuminating the second irradiation range corresponding to the activation side of the direction indicator lamp is applied.

With this configuration, before the right or left turn or before the course change, the course-changed path can be illuminated with the first illumination light from the timing before the vehicle body is tilted. Thus, the visibility of the course-changed path when the direction indicator lamp is on is improved, and the convenience for the occupant can be further improved.

(Configuration 2) The saddled vehicle according to configuration 1, in which the control unit causes, in the case in which the direction indicator lamp is activated and the vehicle body is not tilted, and further in a case in which a vehicle speed is equal to or lower than a first speed, the first illumination light corresponding to the activation side of the direction indicator lamp to be applied.

With this configuration, when the vehicle speed is a low speed of equal to or lower than the first speed, the course-changed path can be illuminated with the first illumination light from a timing before the vehicle body is tilted, and it is possible to improve the visibility of the course-changed path when the direction indicator lamp is on and to further improve the convenience for the occupant.

(Configuration 3) The saddled vehicle according to configuration 2, in which the case in which the vehicle speed is equal to or lower than the first speed includes a state in which the vehicle speed is zero.

With this configuration, for example, at the time of standby to turn right or left, the destination of the right or left turn can be illuminated with the first illumination light from a timing before the vehicle body is tilted, and it is possible to further improve the convenience for the occupant.

(Configuration 4) The saddled vehicle according to any one of configurations 1 to 3, in which the control unit stops irradiation of the second illumination light when, after the second illumination light is applied, a tilt angle of the vehicle body is equal to or lower than a predetermined angle.

With this configuration, even in the case in which the direction indicator lamp is activated, when the tilt angle to the right or left of the vehicle body returns to the upright side, the second illumination light can be turned off, and in a case in which the turn-on switching is performed between the first illumination light and the second illumination light in accordance with the tilt of the vehicle body, switching from the second illumination light to the first illumination light can be smoothly performed.

(Configuration 5) The saddled vehicle according to any one of configurations 1 to 4, in which the control unit stops irradiation of the first illumination light when, after the first illumination light is applied, the vehicle body is tilted to a side opposite to the activated direction indicator lamp based on the tilt information.

With this configuration, it is possible to prevent dazzling caused by unnecessary irradiation of the first illumination light due to forgetting to operate the direction indicator lamp, and to reduce the influence of the irradiation of the first illumination light on the surroundings.

(Configuration 6) The saddled vehicle according to any one of configurations 1 to 5, in which the case in which the vehicle body is not tilted refers to a case in which a tilt angle of the vehicle body is in a predetermined range around 0°.

With this configuration, even in the case of the tilted state in a level that can be regarded as the upright state before the right or left turn or before the course change, the first illumination light is applied, and hence the course-changed path can be illuminated with the first illumination light from an early timing, and it is possible to further improve the convenience for the occupant.

(Configuration 7) The saddled vehicle according to any one of configurations 1 to 7, further including a surrounding information acquisition unit that acquires brightness of a surrounding environment of the vehicle body, in which the control unit causes: in the case in which the direction indicator lamp is activated and the vehicle body is not tilted, and further in a case in which a vehicle speed is equal to or lower than a first speed, the first illumination light corresponding to the direction indicator lamp on the activation side to be applied; and, in a case in which the brightness is equal to or lower than a predetermined brightness and the vehicle speed is equal to or higher than a second speed that is higher than the first speed, the second illumination light to be applied toward front right and left sides of the vehicle body regardless of whether or not the direction indicator lamp is activated or whether or not the vehicle body is tilted to right or left.

With this configuration, before the right or left turn or before the course change at which the vehicle speed is equal to or lower than the first speed, the course-changed path can be illuminated with the first illumination light from a timing before the vehicle body is tilted, and thus the convenience for the occupant can be further improved. In addition, when the vehicle is traveling at a relatively high speed under a situation of dark surroundings, the second illumination light can be applied toward the right and the left of the vehicle body, and thus the visibility from other vehicles is improved.

### Reference Signs List

- 1: saddled vehicle
- 2: headlight
- 3: direction indicator lamp
- 4: operation unit
- 4A: operation switch
- 5: vehicle sensor
- 6: surrounding information acquisition unit
- 10: driving support device
- 11: information processing unit
- 21: activation detection unit
- 22: tilt information acquisition unit
- 23: vehicle speed detection unit
- 24: control unit
- LC: vehicle width center
- Lc1: first illumination light
- Lc2: second illumination light
- Lo1: low beam

## Claims

1. A saddled vehicle comprising a direction indicator lamp (3), and a control unit (24) that controls lighting equipment provided in a vehicle body,
wherein the lighting equipment is capable of applying, relative to the vehicle body when it is standing upright, a first irradiation range that is on a front right or left side of the vehicle body, and a second irradiation range that is on the front right or left side on a vehicle-body forward side of the first irradiation range, and
wherein the control unit (24) performs control such that, in a case in which the direction indicator lamp (3) is activated and the vehicle body is not tilted, first illumination light (Lc1) capable of illuminating the first irradiation range corresponding to an activation side of the direction indicator lamp (3) is applied, and in a case in which the direction indicator lamp (3) is activated and the vehicle body is tilted by a predetermined level or more, second illumination light (Lc2) capable of illuminating the second irradiation range corresponding to the activation side of the direction indicator lamp (3) is applied.

2. The saddled vehicle according to claim 1, wherein the control unit (24) causes, in the case in which the direction indicator lamp (3) is activated and the vehicle body is not tilted, and further in a case in which a vehicle speed is equal to or lower than a first speed, the first illumination light (Lc1) corresponding to the activation side of the direction indicator lamp (3) to be applied.

3. The saddled vehicle according to claim 2, wherein the case in which the vehicle speed is equal to or lower than the first speed includes a state in which the vehicle speed is zero.

4. The saddled vehicle according to claim 1, wherein the control unit (24) stops irradiation of the second illumination light (Lc2) when, after the second illumination light (Lc2) is applied, a tilt angle of the vehicle body is equal to or lower than a predetermined angle.

5. The saddled vehicle according to any one of claims 1 to 4, wherein the control unit (24) stops irradiation of the first illumination light (Lc1) when, after the first illumination light (Lc1) is applied, the vehicle body is tilted to a side opposite to the activated direction indicator lamp (3).

6. The saddled vehicle according to any one of claims 1 to 4, wherein the case in which the vehicle body is not tilted refers to a case in which a tilt angle of the vehicle body is in a predetermined range around 0°.

7. The saddled vehicle according to any one of claims 1 to 4, further comprising a surrounding information acquisition unit (6) that acquires brightness of a surrounding environment of the vehicle body,
wherein the control unit (24) causes:
in the case in which the direction indicator lamp (3) is activated and the vehicle body is not tilted, and further in a case in which a vehicle speed is equal to or lower than a first speed, the first illumination light (Lc1) corresponding to the direction indicator lamp (3) on the activation side to be applied; and
in a case in which the brightness is equal to or lower than a predetermined brightness and the vehicle speed is equal to or higher than a second speed that is higher than the first speed, the second illumination light (Lc2) to be applied toward front right and left sides of the vehicle body regardless of whether or not the direction indicator lamp (3) is activated or whether or not the vehicle body is tilted to right or left.
